# EUROPEAN PATENT SPECIFICATION

(11) **EP 2 669 721 B1**
(45) Date of publication and mention of the grant of the patent: **04.07.2018**
(21) Application number: 13167452.5
(22) Date of filing: 13.05.2013
(51) Int. Cl.: F21V 8/00, F21S 43/27, F21S 43/237, F21S 43/245, F21S 43/249, B60Q 1/00

(54) **Lighting device for vehicles**
Fahrzeugleuchte
Lumière pour véhicules

(30) Priority: 28.05.2012 IT PD20120169
(43) Date of publication of application: 04.12.2013
(73) Proprietor: Automotive Lighting Italia S.p.A. A Socio Unico, 10078 Venaria Reale, (TO) (IT)
(72) Inventor: Svettini, Marco, 10078 Venaria Reale, (TO) (IT); Londero, Alessandro, 10078 Venaria Reale, (TO) (IT); Fadi, Denis, 10078 Venaria Reale, (TO) (IT); Paroni, Sara, 10078 Venaria Reale, (TO) (IT)
(74) Representative: Mitola, Marco

(56) References cited:
- WO-A1-2011/021250
- DE-A1- 10 143 544
- DE-A1-102006 016 679
- US-A1- 2005 189 545

## Description

The present invention relates to a lighting device for vehicles, such as for example a vehicle light and the like.

The term vehicle light is understood to mean indifferently a rear vehicle light or a front vehicle light, the latter also known as a headlight.

As is known, a vehicle light is a lighting and/or signalling device of a vehicle comprising at least one outer light of the vehicle having a lighting and/or signalling function towards the outside of a vehicle. such as for example a sidelight, an indicator light, a brake light, a rear fog light, a reverse light, a dipped headlight, a main beam headlight and the like.

For the purposes of the present invention however, the term lighting device is taken to mean not just a vehicle light as described above but also further lighting and/or signalling devices, such as map lights and the like.

Consequently, within the sphere of the present invention lighting device for vehicles is taken to mean a lighting and/or signalling device of a vehicle comprising at least one light having a lighting and/or signalling function.

In the description which follows however, reference will be made to a vehicle light without by so doing losing its general application.

The lighting device, in its simplest form comprises a container body, a lenticular body and at least one light source.

The lenticular body is placed so as to close a mouth of the container body so as to form a housing chamber. The light source is arranged inside the housing chamber, which may be directed so as to emit light towards the lenticular body, when powered with electricity.

For design reasons lighting devices are increasingly required to have a curved, even complex contour or at least an overall L-shape, provided with at least two branches inclined in relation to each other, that is to say substantially perpendicular, through which the beam of light is transmitted.

The lighting devices of the prior art having such configuration have technical limitations as regards the choice of the diffusion means of the beam of light.

In fact, where lamps are used, whether traditional, halogen, LED or gaseous discharge, which emit a beam of light directed perpendicularly to the lenticular body, no problems of homogeneity of the beam produced arise.

Instead, in the case where light guides are used, the corner portion between the at least two reciprocally perpendicular branches constitutes a photometric critical point.

In fact, the light source is placed at one end of the light guide and the beam of light emitted tends to come out at the corner portion as a result of a dominant reflection condition. In other words, at least a portion of the beam of light which is propagated inside the light guide is locally extracted at the corner portion of the light guide, towards the outside of said light guide in a non-uniform manner in relation to the branches of the light guide, generating a spot of light. Vehicle lights of this kind are disclosed in US 2005/0189545 A1.

The optical effect to an outside observer is that of unevenness as a result of the spots of light at such corner portions. For such reason the solutions of the prior art do not permit the use of light guides having at least an L-shape able to produce uniform luminosity with particular reference to the corner portions.

The purpose of the present invention is to make a lighting device able to resolve the drawbacks and limitations mentioned above with reference to the solutions of the prior art.

Such purpose is achieved by a lighting device according to claim 1.

Other embodiments of the lighting device according to the invention are described in the subsequent claims.

Further characteristics and advantages of the present invention will be more clearly comprehensible from the description given below of its preferred and non-limiting embodiments, wherein:

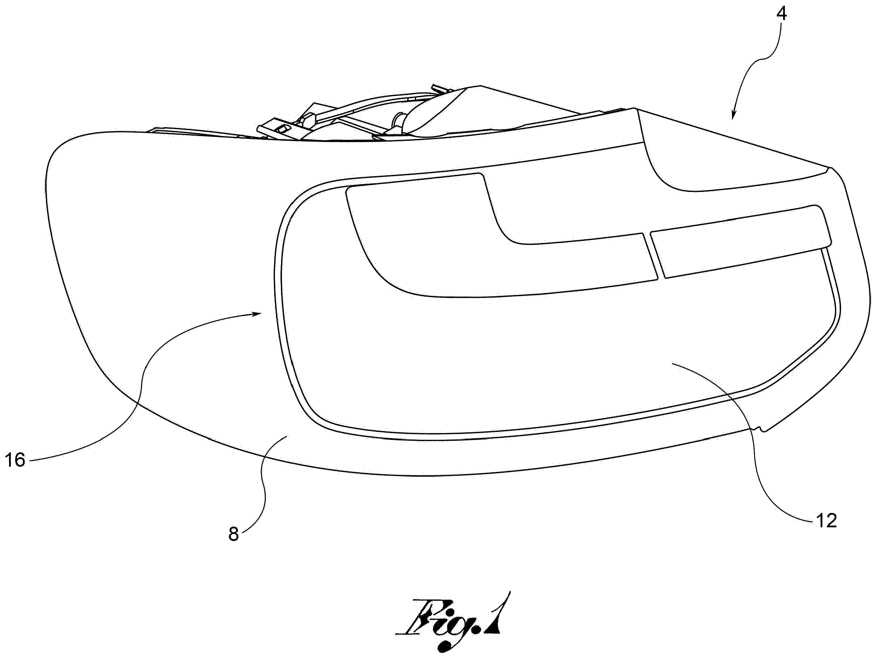

- figure 1 shows a perspective view, in an assembled configuration, of a lighting device for vehicles according to one embodiment of the present invention;

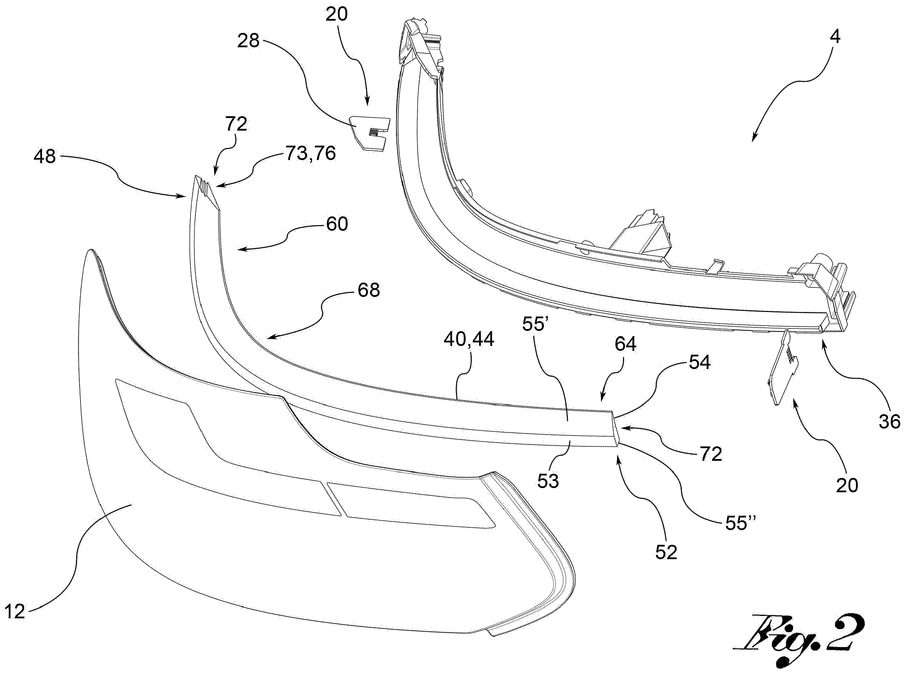

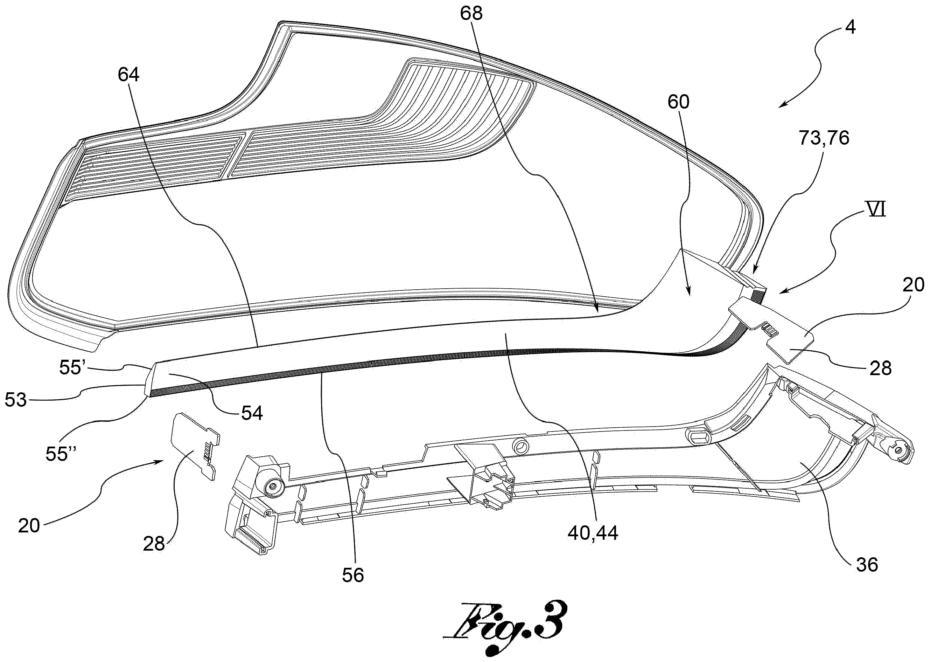

- figures 2 and 3 show perspective views in separate parts, from different angles, of the lighting device in figure 1;

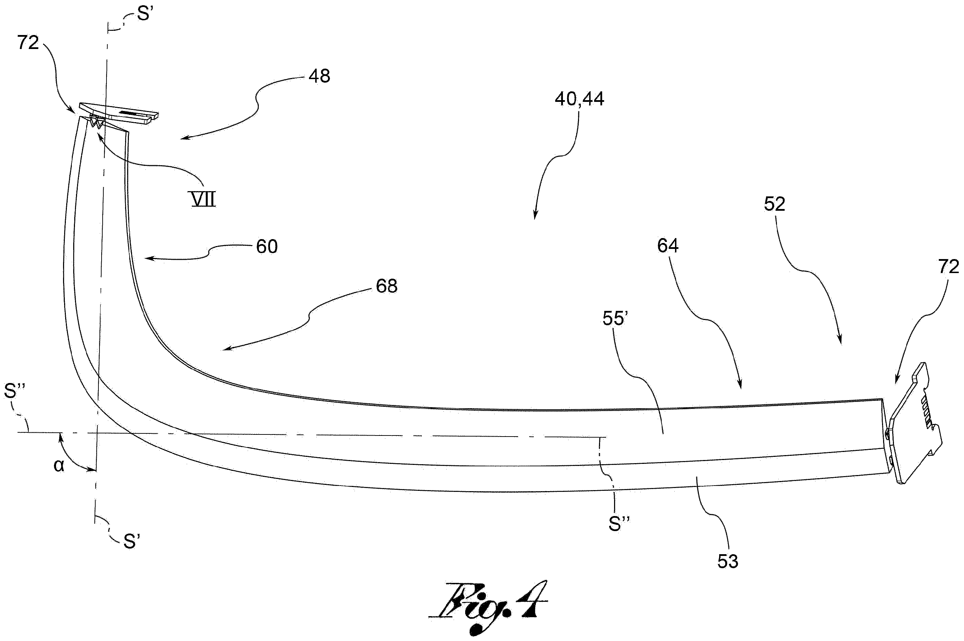

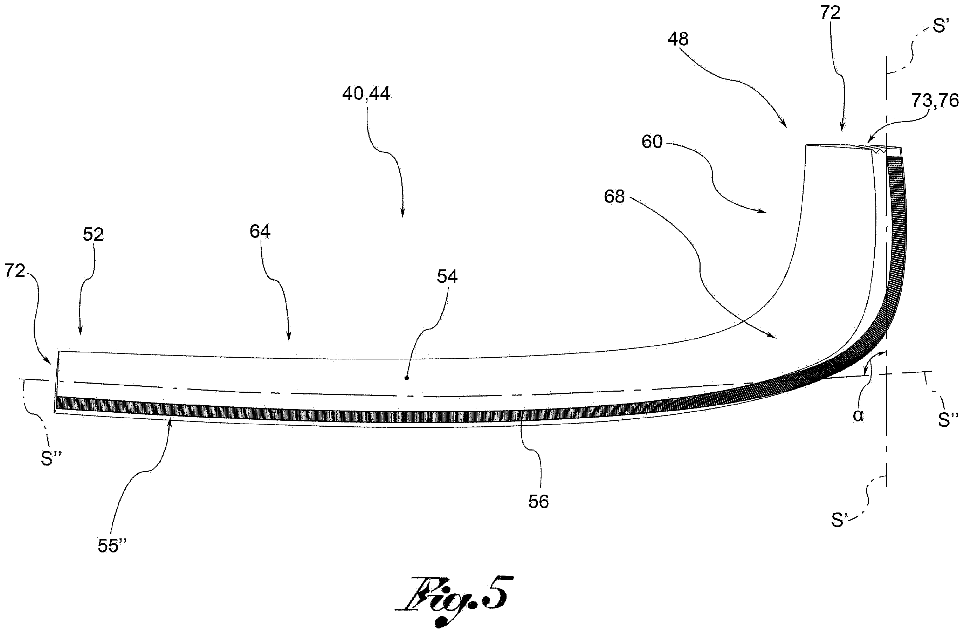

- figures 4 and 5 show perspective views of some components of the lighting device in figure 1;

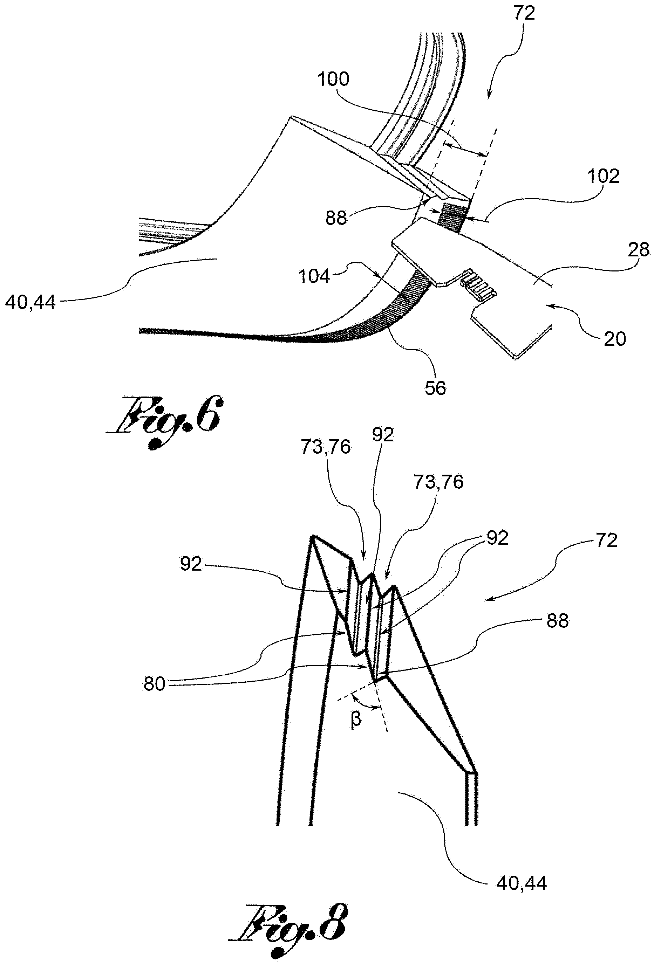

- figure 6 shows an enlarged view of the part VI in figure 3;
- figure 7 shows an enlarged view of the part VII in figure 4;
- figures, 8, 9a and 9b shows perspective views of the part VII in figure 4; according to further embodiments of the present invention;
- figures 10 -11 show schematic views of the propagation of a beam of light inside a lighting device according to the present invention.

The elements or parts of elements common to the embodiments described below will be indicated using the same reference numerals.

With reference to the aforementioned figures, reference numeral 4 globally denotes a lighting device for vehicles, such as for example a vehicle light , which the description which follows refers to without by so doing losing its general application.

As mentioned above, the term vehicle light is understood to mean indifferently a rear vehicle light or a front vehicle light, the latter also known as a headlight. As is known, vehicle lights comprise at least one outer light of the vehicle having a lighting or signalling function, such as for example a sidelight, which may be a front, rear or lateral sidelight, an indicator light, a brake light, a rear fog light, a dipped beam headlight, a main beam headlight and the like.

However, within the sphere of the present invention lighting device for vehicles is taken to mean generally a lighting and/or signalling device of a vehicle comprising at least one vehicle light having a lighting and/or signalling function.

Moreover, the definition of vehicle lighting device should also be understood in a general sense, comprising a lighting device suitable for being used on any type of locomotive vehicle.

The lighting device 4 comprises a container body 8 and a lenticular body 12 which at least partially define a housing chamber 16 hosting at least one light source 20.

The light source 20 is electrically connected to electrical connection means to power the same.

Preferably, said light source 20 is a light emission diode light source, that is to say an LED.

The light source, of whatever type it may be, comprises an emission head 24, that is to say an end portion from which the beam of light originates and is diffused. Such emission head 24 may be of any shape, material and type. the emission head 24 may be connected to a support and /or power supply board 28 of any size and type.

The container body 8 comprises a mouth through which it usually receives and contains the various components of the lighting device; the container body 8 further permits the attachment of the lighting device 4 to the relative vehicle.

The lenticular body is made from at least partially transparent, or semi-transparent or translucid material, and may also comprise an opaque portion.

The lenticular body 12 is placed so as to close the mouth of the container body 8, so as to enclose said housing chamber 16.

According to one embodiment, further components of the lighting device 4 are placed inside the housing chamber 16, such as a reflector body 36, further light sources not shown, and at least one light guide 40.

The reflector body 36 is usually made from an opaque material and has a substantially concave shape with its inner surface mirror-treated, that is to say metallised.

According to one embodiment, the light guide 40 comprises a light guide body 44 suitable for receiving the beam of light emitted by the light source 20 so as to collect and propagate within itself the light emitted by the light source 20, for subsequent reflection. A light of the vehicle light, such as a sidelight, may thereby be formed.

The light guide body is usually made from a transparent material and bases its functioning principle on the same physical principles which regulate the transmission of light inside optic fibres. The light guide body 44 is placed next to the light source 20 so as to collect and propagate within itself, the light emitted by said light source. The light propagated inside the light guide body 44 is then extracted and distributed in the surrounding space as desired, as described further below.

The container body 8, the lenticular body 12, the reflector body and the light guide body 44 are usually made respectively of one or more polymer materials, such as, for example, polycarbonate (PC), polymethylmethacrylate (PMMA) (plexiglass), acrylonitrile butadiene styrene (ABS), APEC, or polypropylene (PP).

The light guide body 40 extends from a first to a second end 48, 52; in general it may also be of varying shape and size.

According to one embodiment, the light guide body 44 has a cross-section geometry defined by a closed polyline. The cross-section of the light guide body 44 is understood as measured in relation to a cross-section plane perpendicular to the main direction of extension S of the light guide body, as described further below. For example, such geometry defines overall a front wall 53, facing the lenticular body 12, a rear wall 54 opposite the front wall 53, and a pair of side walls 55', 55" which connect the front wall 53 to the rear wall 54. For example, one of said side walls 55' is at least partially facing the lenticular body 12.

For example the light guide body 44 has an overall polygonal cross-section, substantially in the shape of a rectangular trapezium wherein the greater and lesser bases of the trapezium are given by the rear 54 and front 53 walls respectively, and the remaining sides are given by the side walls 55', 55".

As described further below, the light guide 40 is fitted with a plurality of light extraction elements 56 applied to the light guide body 44, suitable for extracting the light propagated inside the light guide body 44 outwards of the light guide 40 and of the lenticular body 12.

The light guide body 44 comprises at least two branches, that is a first and a second branch 60,64 directed along a first and a second main extension direction S', S" forming with each other an angle α of 70 to 110 degrees and connected by a relative angular portion 68. Preferably, said angle α is from 80 to 100 degrees and even more preferably, said angle α is equal to approximately 90 degrees.

Said first and second branches 60, 64 are not necessarily rectilinear, they may be any shape, even curved: overall the respective main directions of extension S', S" may be defined as the directions which define overall the direction of said branch. For example, in the case in which the branch defines, for example but not necessarily, the arc of a circumference or parabola, the main extension direction S of said branch will be aligned with the chord subtended to said arc.

According to a possible embodiment, the light guide body 44 is twisted along its main extension direction S; in other words, along the main extension direction S the light guide body 44 has cross-sections which are gradually rotated in relation to said main extension.

The at least one light source 20 is positioned at at least one of said first and second ends 48,52 provided with a light input wall 72 suitable for receiving and transmitting the beam of light produced by said light source,

Advantageously, the light input wall 72 is shaped in such a way as to present at least one dividing element 73 of the beam of light incident to the light input wall 72 wherein said dividing element 73 has the function of receiving the beam of light, dividing it into at least two lobes 84, and preferably aiming said lobes 84 towards the side walls 55',55" of the light guide body 44 so as to create a shadow portion 74, directly facing the light source 20 and directed towards the angular portion 68.

The light source 20 then comprises an emission head 24 facing the dividing element 73 in such a way that the beam of light produced by it converges on said dividing element 73, and is divided into two lobes 84 thereat.

In other words, the beam of light incident on the dividing element 73 is divided into two lobes 84 which are deviated towards the side walls 55', 55" of the light guide body 44 so as to obtain a shadow portion or zone 74 directed towards the angular portion 68, which is not illuminated by direct illumination by the light source 20.

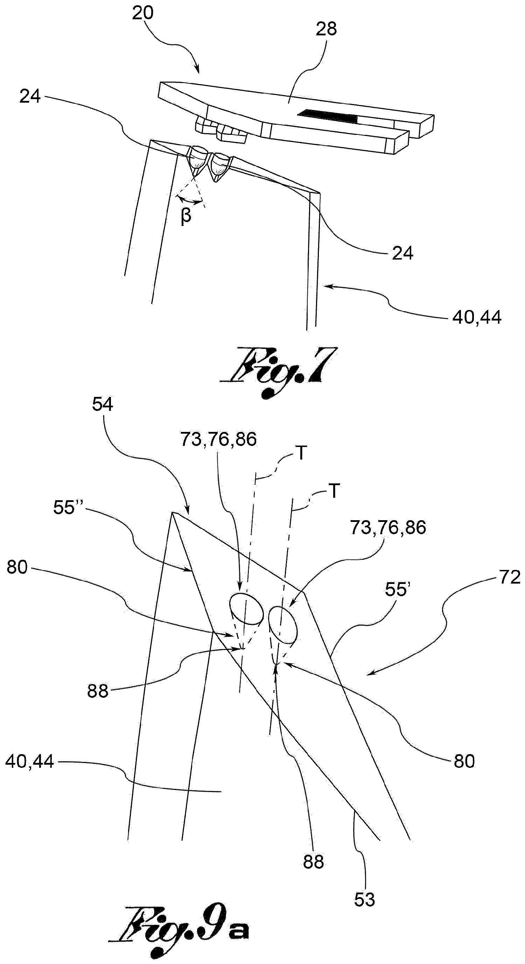

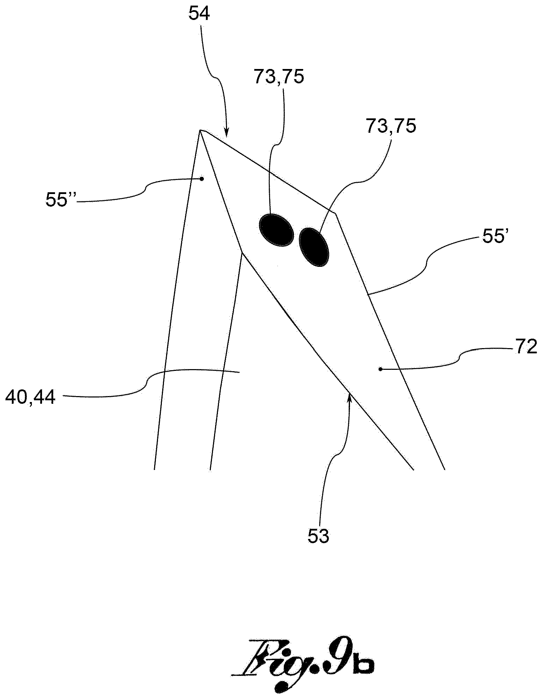

According to a possible embodiment (figure 9b), said dividing element 73 of the beam of light comprises a plate or a facing 75, joined to the light input wall 72 so as to screen the incident beam of light and divide it into two lobes 84, which are for example deviated towards the side walls 55', 55". Moreover, rearwards of the plate 75, that is on the side opposite the emission head 24, the shadow portion 74 directed towards the angular portion 68 is created.

According to a further embodiment, the dividing element 73 comprises at least one indentation 76 having a direction converging towards a neck 80, on the side opposite the light input wall 72,

The light source 20 comprises an emission head 24 facing said indentation 76 in such a way that the beam of light produced by it converges on said indentation 76, and is divided into two lobes 84 at said neck 80 of the indentation 76.

According to one embodiment, the lighting device 4 comprises a plurality of indentations 76 and relative light sources 20, wherein each light source 20 faces a relative indentation 76 and projects its beam of light exclusively in said relative indentation 76, each beam of light being sub-divided into two lobes 84.

According to one embodiment, the indentations 76 are shaped like cones 86 the vertex of which is positioned at said neck 80.

For example, said cones 86 are circular or elliptical based cones.

Preferably, the cones 86 are provided with an axis of symmetry T the extension of which intersects the angular portion 68 of the light guide body 44.

According to one embodiment, the cones 86, at the vertex, have a connector 88 having a curvature radius of 0.1 to 0.5 mm.

According to a further embodiment, said indentations 76 are defined by a pair of walls 92 incident to each other at said neck 80, so as to assume a "V"-shape. Said walls 92 may be flat or curved.

According to one embodiment, said walls 92 are flat and incident to each other according to an angle of incidence β of 50 to 130 degrees.

Preferably, said angle of incidence β is from 70 to 110 degrees and, even more preferably, said angle of incidence β is equal to approximately 90 degrees.

According to one embodiment, at said neck 80 there is a connector 88 having a curvature radius of 0.1 to 0.5 mm.

According to one embodiment, each indentation 76 is provided with an axis or plane of symmetry T passing through the relative neck and intersection between the walls 92 and wherein the extension of said axis or plane of symmetry T intersects said angular portion 68 of the light guide body 44.

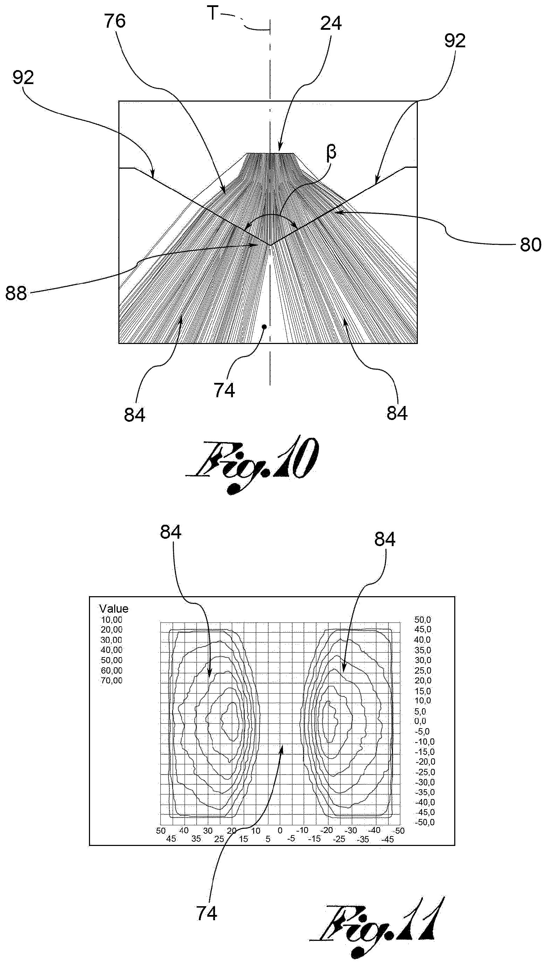

Regardless of the shape and type of the light source 20 and the indentations 76 the beam of light produced by the light source incident on the neck 80 divides into two lobes 84, substantially symmetrical to the neck 80, as illustrated for example in figures 10 and 11.

In particular, it may be noted how the neck 80 creates a shadow area not crossed by said beams of light.

The light extraction elements 56 are positioned on a rear wall 54 of the light guide body 44, opposite the front wall 53 facing the lenticular body 12.

According to one embodiment, the light extraction elements 56 are prisms adjacent to each other without interruption.

According to one embodiment, the light extraction elements 56 occupy a limited portion 102 as regards the overall height 100 of the rear wall 54 of the light guide body 44, and wherein the portion of rear wall 54 not influenced by the light extraction elements 56 is a portion 104 treated so as to achieve a diffused light effect.

For example, such treatment is obtained by a frosting process of the light guide body 44.

According to a further embodiment, the light extraction elements 56 comprise an entirely textured and/or frosted surface.

Such textured and/or frosted surface may be applied to the outer surface of the aforementioned prisms, or may be used in place of said prisms.

As may be seen from the description, the lighting device according to the invention makes it possible to overcome the drawbacks of the prior art presented.

In fact, the lighting device according to the present invention, permits the production of light guides having any geometry, with particular reference to geometries having branches angled to each other at right angles, without for such reason having uneven spots of light.

Consequently, light guides and thus lighting devices may be made, without any geometrical limitation, ensuring a uniform diffusion of the beam of light and a uniform lighting effect to the eyes of an outside observer.

In particular it has been observed that the division into two lobes of the beam of light produced by the light source avoids a direct illumination of the light, in particular, at the angular portion which represents a critical photometric point for the rays of light which tend to be extracted outwards of the light guide forming an unwanted spot of light.

In yet other words, the dividing element divides the beam of light into two lobes which are deviated towards the side walls of the light guide body.

This way a shadow zone is created, direct or aimed towards the angular portion of the light guide body, which de facto prevents a direct lighting of the latter by the light source. The angular portion is then illuminated by the reflection of rays of light, reflected through the light guide, but not directly incident with said angular portion.

A person skilled in the art may make numerous modifications and variations to the lighting devices described above so as to satisfy contingent and specific requirements, while remaining within the sphere of protection of the invention as defined by the following claims.

## Claims

1. Lighting device for vehicles (4) comprising
- a container body (8) and a lenticular body (12) which at least partially define a housing chamber (16) hosting at least one light source (20), electrically connected to electrical connection means to power the same,
- wherein said lighting device (4) comprises at least one light guide (40) having a light guide body (44) suitable for receiving the beam of light from the light source (20) so as to collect and propagate within itself, for subsequent reflection, the light emitted by the light source (20),
- wherein the light guide body (44) extends from a first to a second end (48, 52),
wherein the light guide (40) is fitted with a plurality of light extraction elements (56) applied to the light guide body (44), suitable for extracting the light propagated inside the light guide body (44) outwards of the light guide (40) and of the lenticular body (12),
- wherein the light source (20) is suitable for emitting a beam of light to propagate through said light guide (40), **characterised in that**
- the light guide body (44) comprises at least two branches (60,64) directed along a first and a second main extension direction (S', S'') forming an angle with each other (α) of 70 to 110 degrees and connected by a relative angular portion (68),
- at least one light source (20) is positioned at at least one of said first and second ends (48,52) provided with a light input wall (72) suitable for receiving the beam of light produced by said light source,
- the light input wall (72) is shaped in such a way as to present at least one dividing element (73) of the beam of light incident to the light input wall (72), wherein the light source (20) comprises an emission head (24) in such a way that the beam of light produced by it converges on said dividing element (73),
- wherein said dividing element (73) receives the beam of light and divides it into at least two lobes (84) so as to create a shadow portion (74), directly facing the light source (20) and directed towards the angular portion (68).

2. Lighting device (4) according to claim 1, wherein said dividing element (73) of the beam of light comprises a plate or a facing (75), joined to the light input wall (72) so as to screen the incident beam of light and divide it into two lobes (84) and wherein rearwards of the plate (75), that is on the side opposite the emission head (24), the shadow portion (74) directed towards the angular portion (68) is created.

3. Lighting device (4) according to claim 1 or 2, wherein the dividing element (73) comprises at least one indentation (76) having a direction converging towards a neck (80), on the side opposite the light input wall (72),
- and wherein the light source (20) comprises an emission head (24) facing said indentation (76) in such a way that the beam of light produced converges on said indentation (76) and is divided into two lobes (84) at said neck (80) of the indentation (76).

4. Lighting device (4) according to claim 1, 2 or 3, comprising a plurality of indentations (76) and relative light sources (20), wherein each light source (20) faces a relative indentation (76) and projects its beam of light exclusively in said relative indentation (76), each beam of light being sub-divided into two lobes (84) at said indentation (76).

5. Lighting device (4) according to claim 3 or 4, wherein said indentations (76) are shaped like cones (86) the vertex of which is positioned at said neck (80).

6. Lighting device (4) according to claim 5, wherein said cones (86) are provided with an axis of symmetry (T) the extension of which intersects the angular portion (68) of the light guide body (44).

7. Lighting device (4) according to claim 3 or 4, wherein said indentations (76) are defined by a pair of walls (92) incident to each other at said neck, so as to assume a "V"-shape.

8. Lighting device (4) according to claim 7, wherein said walls (92) are incident to each other according to an angle of incidence of (β) of 50 to 130 degrees.

9. Lighting device (4) according to claim 8, wherein said angle of incidence (β) is 70 to 110 degrees.

10. Lighting device (4) according to any of the claims from 7 to 9, wherein each indentation (76) is provided with an axis or plane of symmetry (T) passing through the relative intersection vertex between the walls (92), and wherein the extension of said axis or plane of symmetry (T) intersects said angular portion (68) of the light guide body (44).

11. Lighting device (4) according to any of the previous claims, wherein the light extraction elements (56) are positioned on a rear wall (96) of the light guide body (44) opposite the lenticular body (12).

12. Lighting device (4) according to any of the previous claims, wherein the light extraction elements (56) occupy a limited portion (102) as regards the overall height (100) of a rear wall (96) of the light guide body (44), and wherein the portion of rear wall (96) not influenced by the light extraction elements (56) is a portion (104) treated so as to achieve a diffused light effect.

13. Lighting device (4) according to any of the previous claims, wherein the light guide body (44) has a geometry in cross-section, defined by a closed polyline, said cross-section being measured in relation to cross-section plane perpendicular to the main extension direction (S) of the light guide body (44).

14. Lighting device (4) according to claim 13, wherein the cross-section of the light guide body (44) comprises a front wall (53), facing the lenticular body (12), a rear wall (54) opposite the front wall (53), and a pair of side walls (55', 55'')which connect the front wall (53) to the rear wall (54), so as to assume overall a polygonal rectangular trapezium cross-section, wherein the greater and lesser bases of the trapezium are given by the rear (54) and front (53) walls respectively, and the remaining sides are given by the side walls (55', 55").

15. Lighting device (4) according to any of the previous claims, wherein the light guide body (44) is twisted along its main extension direction (S) so that, along the main extension direction (S), the light guide body (44) has cross-sections which are gradually rotated in relation to said main extension.

## Patentansprüche

1. Leuchtvorrichtung (4) für Fahrzeuge, die umfasst:
- einen Behälterkörper (8) und einen linsenförmigen Körper (12), die eine Gehäusekammer (16), die wenigstens eine Lichtquelle (20) beherbergt, die mit elektrischen Verbindungsmitteln elektrisch verbunden ist, um diese zu versorgen, wenigstens teilweise definieren,
- wobei die Leuchtvorrichtung (4) wenigstens einen Lichtleiter (40) mit einem Lichtleiterkörper (44) umfasst, der geeignet ist, um den Lichtstrahl von der Lichtquelle (20) zu empfangen, um das durch die Lichtquelle (20) emittierte Licht in ihm selbst für die nachfolgende Reflexion zu sammeln und auszubreiten,
- wobei der Lichtleiterkörper (44) sich von einem ersten zu einem zweiten Ende (48, 52) erstreckt,
wobei der Lichtleiter (40) mit einer Vielzahl von Lichtextraktionselementen (56) ausgerüstet ist, die auf den Lichtleiterkörper (44) aufgebracht sind, die geeignet sind, um das Licht, das im Inneren des Lichtleiterkörpers (44) ausgebreitet wird, auswärts von dem Lichtleiter (40) und von dem linsenförmigen Körper (12) zu extrahieren,
- wobei die Lichtquelle (20) geeignet ist, um einen Lichtstrahl zu emittieren, um ihn durch den Lichtleiter (40) auszubreiten,
**dadurch gekennzeichnet, dass**
- der Lichtleiterkörper (44) wenigstens zwei Zweige (60, 64) umfasst, die entlang einer ersten und einer zweiten Haupterstreckungsrichtung (S', S") gerichtet sind, die einen Winkel (α) miteinander von 70 bis 110 Grad bilden und durch einen Relativwinkelabschnitt (68) verbunden sind,
- wenigstens eine Lichtquelle (20) an wenigstens einem der ersten und zweiten Enden (48, 52) positioniert ist, die mit einer Lichteingangswand (72) versehen sind, die geeignet ist, um den von der Lichtquelle erzeugten Lichtstrahl zu empfangen,
- die Lichteingangsquelle (72) in einer derartigen Weise geformt ist, dass sie wenigstens ein Teilerelement (73) für den auf die Lichteingangswand (72) einfallenden Lichtstrahl bildet, wobei die Lichtquelle (20) einen Emissionskopf (24) in einer derartigen Weise umfasst, dass der von ihm erzeugte Lichtstrahl auf dem Teilerelement (73) konvergiert,
- wobei das Teilerelement (73) den Lichtstrahl empfängt und ihn in wenigstens zwei Keulen (84) teilt, um einen Schattenabschnitt (74) zu erzeugen, welcher der Lichtquelle (20) direkt zugewandt ist und in Richtung des Winkelabschnitts (68) gerichtet ist.

2. Leuchtvorrichtung (4) nach Anspruch 1, wobei das Lichtstrahlteilerelement (73) eine Platte oder eine Deckschicht (75) umfasst, die mit der Lichteingangswand (72) verbunden ist, um den einfallenden Lichtstrahl abzuschirmen und ihn in zwei Keulen (84) zu teilen, und wobei rückwärts von der Platte (75), die auf der Seite entgegengesetzt zu dem Emissionskopf (24) ist, der Schattenabschnitt (74) erzeugt wird, der in Richtung des Winkelabschnitts (68) gerichtet ist.

3. Leuchtvorrichtung (4) nach Anspruch 1 oder 2, wobei das Teilerelement (73) wenigstens eine Einkerbung (76) mit einer Richtung, die in Richtung eines Halses (80) konvergiert, auf der zu der Lichteingangswand (72) entgegengesetzten Seite umfasst,
- und wobei die Lichtquelle (20) einen Emissionskopf (24) umfasst, welcher der Einkerbung (76) in einer derartigen Weise zugewandt ist, dass der erzeugte Lichtstrahl auf der Einkerbung (76) konvergiert und an dem Hals (80) der Einkerbung (76) in zwei Keulen (84) geteilt wird.

4. Leuchtvorrichtung (4) nach Anspruch 1, 2 oder 3, die mehrere Einkerbungen (76) und jeweilige Lichtquellen (20) umfasst, wobei jede Lichtquelle (20) einer jeweiligen Einkerbung (76) zugewandt ist und ihren Lichtstrahl ausschließlich in die jeweilige Einkerbung (76) projiziert, wobei jeder Lichtstrahl an der Einkerbung in zwei Keulen (84) unterteilt wird.

5. Leuchtvorrichtung (4) nach Anspruch 3 oder 4, wobei die Einkerbungen (76) wie Kegel (86) geformt sind, deren Spitze an dem Hals (80) positioniert ist.

6. Leuchtvorrichtung (4) nach Anspruch 5, wobei die Kegel (86) mit einer Symmetrieachse (T) versehen sind, deren Erstreckung den Winkelabschnitt (68) des Lichtleiterkörpers (44) schneidet.

7. Leuchtvorrichtung (4) nach Anspruch 3 oder 4, wobei die Einkerbungen (76) durch ein Paar von Wänden (92) definiert sind, die an dem Hals aufeinander auftreffen, um eine "V"-Form anzunehmen.

8. Leuchtvorrichtung (4) nach Anspruch 7, wobei die Wände (92) gemäß einem Einfallswinkel (β) von 50 bis 130 Grad aufeinander einfallen.

9. Leuchtvorrichtung (4) nach Anspruch 8, wobei der Einfallswinkel (β) 70 bis 110 Grad ist.

10. Leuchtvorrichtung (4) nach einem der Ansprüche 7 bis 9, wobei jede Einkerbung (76) mit einer Symmetrieachse oder Ebene (T) versehen ist, die durch den jeweiligen Schnittscheitel zwischen den Wänden (92) geht, und wobei die Verlängerung der Symmetrieachse oder Ebene (T) den Winkelabschnitt (68) des Lichtleiterkörpers (44) schneidet.

11. Leuchtvorrichtung (4) nach einem der vorhergehenden Ansprüche, wobei die Lichtextraktionselemente (56) auf einer Rückwand (96) des Lichtleiterkörpers (44) entgegengesetzt zu dem linsenförmigen Körper (12) positioniert sind.

12. Leuchtvorrichtung (4) nach einem der vorhergehenden Ansprüche, wobei die Lichtextraktionselemente (56), was die Gesamthöhe (100) einer Rückwand (96) des Lichtleiterkörpers (44) betrifft, einen begrenzten Abschnitt (102) belegen, und wobei der Abschnitt der Rückwand (96), der nicht durch die Lichtextraktionselemente (56) beeinflusst wird, ein Abschnitt (104) ist, der behandelt ist, um eine Streulichtwirkung zu erreichen.

13. Leuchtvorrichtung (4) nach einem der vorhergehenden Ansprüche, wobei der Lichtleiterkörper (44) im Querschnitt eine Geometrie hat, die durch einen geschlossenen Linienzug definiert wird, wobei der Querschnitt in Bezug auf die Querschnittebene senkrecht zu der Hauptausdehnungsrichtung (S) des Lichtleiterkörpers (44) gemessen wird.

14. Leuchtvorrichtung (4) nach Anspruch 13, wobei der Querschnitt des Lichtleiterkörpers (44) umfasst: eine Vorderwand (53, die dem linsenförmigen Körper (12) zugewandt ist, eine Rückwand (54) entgegengesetzt zu der Vorderwand (53) und ein Paar von Seitenwänden (55', 55"), welche die Vorderwand (53) mit der Rückwand (54) verbinden, um insgesamt einen polygonalen rechteckigen Trapezquerschnitt anzunehmen, wobei die größere kleinere Trapezgrundlinie jeweils durch die Rück- (54) und Vorderwände (53) gegeben sind, und die verbleibenden Seiten durch die Seitenwände (55', 55") gegeben sind.

15. Leuchtvorrichtung (4) nach einem der vorhergehenden Ansprüche, wobei der Lichtleiterkörper (44) entlang seiner Haupterstreckungsrichtung (S) derart gewunden ist, dass der Lichtleiterkörper (44) entlang der Haupterstreckungsrichtung (S) Querschnitte hat, die in Bezug auf die Hauptausdehnung allmählich gedreht sind.

## Revendications

1. Dispositif d'éclairage pour véhicules (4) comprenant
- un corps de récipient (8) et un corps lenticulaire (12) qui définissent au moins partiellement une chambre de logement (16) accueillant au moins une source de lumière (20), connectée électriquement à des moyens de connexion électrique pour alimenter celle-ci,
- dans lequel ledit dispositif d'éclairage (4) comprend au moins un guide de lumière (40) ayant un corps de guide de lumière (44) adéquat pour recevoir le faisceau de lumière en provenance de la source de lumière (20) de façon à collecter et à propager au sein de lui-même, pour une réflexion ultérieure, la lumière émise par la source de lumière (20),
- dans lequel le corps de guide de lumière (44) s'étend d'une première à une seconde extrémité (48, 52),
dans lequel le guide de lumière (40) est équipé d'une pluralité d'éléments d'extraction de lumière (56) appliqués sur le corps de guide de lumière (44), adéquats pour extraire la lumière propagée à l'intérieur du corps de guide de lumière (44) vers l'extérieur du guide de lumière (40) et du corps lenticulaire (12),
- dans lequel la source de lumière (20) est adéquate pour émettre un faisceau de lumière à propager à travers ledit guide de lumière (40), **caractérisé en ce que**
- le corps de guide de lumière (44) comprend au moins deux branches (60, 64) dirigées le long d'une première et d'une seconde direction d'extension principale (S', S") formant un angle l'une avec l'autre (α) de 70 à 110 degrés et connectées par une partie angulaire relative (68),
- au moins une source de lumière (20) est positionnée au niveau d'au moins une desdites première et seconde extrémités (48, 52) pourvues d'une paroi d'entrée de lumière (72) adéquate pour recevoir le faisceau de lumière produit par ladite source de lumière,
- la paroi d'entrée de lumière (72) est mise en forme de façon à présenter au moins un élément de division (73) du faisceau de lumière incident sur la paroi d'entrée de lumière (72), dans lequel la source de lumière (20) comprend une tête d'émission (24) de telle façon que le faisceau de lumière produit par elle converge sur ledit élément de division (73),
- dans lequel ledit élément de division (73) reçoit le faisceau de lumière et le divise en au moins deux lobes (84) de façon à créer une partie ombragée (74), faisant directement face à la source de lumière (20) et dirigée vers la partie angulaire (68).

2. Dispositif d'éclairage (4) selon la revendication 1, dans lequel ledit élément de division (73) du faisceau de lumière comprend une plaque ou un revêtement (75), assemblé à la paroi d'entrée de lumière (72) de façon à filtrer le faisceau incident de lumière et à le diviser en deux lobes (84) et dans lequel vers l'arrière de la plaque (75), c'est-à-dire sur le côté opposé à la tête d'émission (24), la partie ombragée (74) dirigée vers la partie angulaire (68) est créée.

3. Dispositif d'éclairage (4) selon la revendication 1 ou 2, dans lequel l'élément de division (73) comprend au moins un enfoncement (76) ayant une direction convergeant vers un col (80), sur le côté opposé à la paroi d'entrée de lumière (72),
- et dans lequel la source de lumière (20) comprend une tête d'émission (24) faisant face audit enfoncement (76) de telle façon que le faisceau de lumière produit converge sur ledit enfoncement (76) et est divisé en deux lobes (84) au niveau dudit col (80) de l'enfoncement (76).

4. Dispositif d'éclairage (4) selon la revendication 1, 2 ou 3, comprenant une pluralité d'enfoncements (76) et de sources de lumière (20) relatives, dans lequel chaque source de lumière (20) fait face à un enfoncement (76) relatif et projette son faisceau de lumière exclusivement dans ledit enfoncement relatif (76), chaque rayon de lumière étant subdivisé en deux lobes (84) au niveau dudit enfoncement (76).

5. Dispositif d'éclairage (4) selon la revendication 3 ou 4, dans lequel lesdits enfoncements (76) ont la forme de cônes (86) dont le sommet est positionné au niveau dudit col (80).

6. Dispositif d'éclairage (4) selon la revendication 5, dans lequel lesdits cônes (86) sont pourvus d'un axe de symétrie (T) dont l'extension croise la partie angulaire (68) du corps de guide de lumière (44).

7. Dispositif d'éclairage (4) selon la revendication 3 ou 4, dans lequel lesdits enfoncements (76) sont définis par une paire de parois (92) incidentes entre elles au niveau dudit col, de façon à adopter une forme de « V ».

8. Dispositif d'éclairage (4) selon la revendication 7, dans lequel lesdites parois (92) sont incidentes entre elles selon un angle d'incidence de (β) de 50 à 130 degrés.

9. Dispositif d'éclairage (4) selon la revendication 8, dans lequel ledit angle d'incidence de (β) est de 70 à 110 degrés.

10. Dispositif d'éclairage (4) selon l'une quelconque des revendications 7 à 9, dans lequel chaque enfoncement (76) est pourvu d'un axe ou plan de symétrie (T) passant à travers le sommet d'intersection relative entre les parois (92), et dans lequel l'extension dudit axe ou plan de symétrie (T) croise ladite partie angulaire (68) du corps de guide de lumière (44).

11. Dispositif d'éclairage (4) selon l'une quelconque des revendications précédentes, dans lequel les éléments d'extraction de lumière (56) sont positionnés sur une paroi arrière (96) du corps de guide de lumière (44) opposé au corps lenticulaire (12).

12. Dispositif d'éclairage (4) selon l'une quelconque des revendications précédentes, dans lequel les éléments d'extraction de lumière (56) occupent une partie limitée (102) en ce qui concerne la hauteur globale (100) d'une paroi arrière (96) du corps de guide de lumière (44), et dans lequel la partie de paroi arrière (96) non influencée par les éléments d'extraction de lumière (56) est une partie (104) traitée de façon à obtenir un effet de lumière diffuse.

13. Dispositif d'éclairage (4) selon l'une quelconque des revendications précédentes, dans lequel le corps de guide de lumière (44) a une géométrie en section transversale, définie par un polygone fermé, ladite section transversale étant mesurée par rapport à un plan de section transversale perpendiculaire à la direction d'extension principale (S) du corps de guide de lumière (44).

14. Dispositif d'éclairage (4) selon la revendication 13, dans lequel la section transversale du corps de guide de lumière (44) comprend une paroi avant (53), faisant face au corps lenticulaire (12), une paroi arrière opposée à la paroi avant (53), et une paire de parois latérales (55', 55") qui connectent la paroi avant (53) à la paroi arrière (54), de façon à adopter globalement une section transversale en trapèze rectangulaire polygonale, dans lequel les bases supérieure et inférieure du trapèze sont données par les parois arrière (54) et avant (53) respectivement, et les côtés restants sont donnés par les parois latérales (55', 55").

15. Dispositif d'éclairage (4) selon l'une quelconque des revendications précédentes, dans lequel le corps de guide de lumière (44) est vrillé le long de sa direction d'extension principale (S) de sorte que, le long de la direction d'extension principale (S), le corps de guide de lumière (44) a des sections transversales qui sont tournées graduellement par rapport à ladite extension principale.
